# EUROPEAN PATENT APPLICATION

(11) **EP 1 473 141 A1**
(43) Date of publication of application: **03.11.2004**
(21) Application number: 04076338.5
(22) Date of filing: 03.05.2004
(51) Int. Cl.: B29C 63/04

(54) **Method and apparatus for fixing a flexible covering material to a visible side of a panel**

(30) Priority: 02.05.2003 NL 1023331
(71) Applicant: Vonk, Anton Johannes, 7121 BK Aalten (NL)
(72) Inventor: Vonk, Anton Johannes, 7121 BK Aalten (NL)
(74) Representative: Bartelds, Erik

(57) **Abstract**

The invention relates to a method for fixing a flexible covering material (2) to a panel by: supplying the panel (1), supplying the covering material (2), applying a layer of glue (3) to the covering material (2), and placing on each other and pressing the panel (1) and the covering material (2). The supply of the panel (1) and the covering material (2) and placing and pressing can herein take place mechanically.

The invention also relates to an installation for performing this method.

## Description

The invention relates to a method for fixing a flexible covering material to a visible side of a panel, comprising the steps of:
a) supplying the panel,
b) supplying the covering material,
c) applying a layer of glue between the visible side of the panel and the covering material, and
d) placing on each other and pressing the visible side of the panel and the covering material.

Such a method is generally known and is for instance used in the production of wall panels for system walls. Such wall panels generally consist of plaster boards which are covered with a decorative layer, for instance wallpaper, on the visible side, i.e. the side directed toward a space in the fitted state.

Panels have been supplied heretofore by lifting them manually from a stack and pushing them through between two rollers. One of the rollers runs through a glue bath, so that one side of the panel, the visible side, is covered in glue. The covered panel is then placed, again manually, on a worktable and a sheet of covering material is placed on the glue-covered side of the panel and pressed in order to remove air bubbles. Finally, and still manually, edges of the covering material possibly protruding outside the panel are cut off. Once the panel has been thus finished, it is once again placed on a stack.

This known method has the drawback of being very labour-intensive and therefore also slow, while it is becoming increasingly difficult to find workers willing to do this work. In addition, it is not readily possible with this method to cover the side edges of the panels with covering material. Finally, a large amount of space is required to carry out the known method, i.e. for the supply stack of panels, for feeding the panels between the rollers, for finishing the panels and for a stack of finished product.

The invention now has for its object to propose an improved method of the above stated type, wherein said drawbacks do not occur. According to a first aspect of the invention, this is achieved in such a method in that the layer of glue is applied to the covering material. Applying the glue layer to the covering material, instead of to the panel, provides a number of advantages. The side edges of the panel can hereby also be covered in simple manner, while applying of the glue layer can moreover be combined with the supply of the covering material in a manner which saves space.

The covering material preferably has a width which is greater than the width of the panel, the glue layer is applied substantially over the whole width of the covering material and, along at least one side edge of the panel, an edge part of the covering material protruding outside this panel is folded around the side edge and glued to the side edge and/or a rear side of the panel remote from the visible side. The covering material can herein be placed on the panel such that an edge part protrudes on both sides thereof, and the protruding edge parts are folded over on both sides and glued to the side edge and/or the rear side of the panel. A panel is thus obtained wherein not only the visible side but also the side edges are covered, whereby the arranging of covering strips on the seams between adjacent panels in a system wall can be dispensed with.

According to a second aspect of the invention, the new method is distinguished from the known method of covering panels in that the covering material is supplied on a roll, and is placed and pressed onto the visible side of the panel from the roll before being cut. The dimensioning of the covering material is thus simplified and it does not have to be pre-cut. Furthermore, little space is hereby necessary for the supply of the covering material.

The cutting can herein preferably take place mechanically, whereby the number of human operations is reduced.

According to a third aspect of the invention, supply of the panel and/or supply of the covering material takes place mechanically. The amount of manpower required to carry out the method is hereby further reduced.

In accordance with yet another aspect of the invention, the pressing and/or folding takes place mechanically, whereby the number of heavy operations is limited still further.

The invention also relates to an installation suitable for carrying out the above described method. The known installation for covering a panel with covering material does in fact only consist of a glue roller and a worktable.

The installation according to the invention is distinguished from the known installation in the first instance in that the glue layer-applying device is adapted to apply the glue layer to the covering material. The advantages to be gained hereby are set forth above with reference to the method.

The installation can in addition or instead be provided with a device for supplying the panel. The panels hereby no longer have to be lifted and transported by hand. The panel supplying device advantageously comprises at least one roller table over which the panels can be transported in simple manner. This roller table can be preceded by a lifting unit for carrying the panels from a stack to the height of the roller table.

According to another aspect of the invention, the installation can be provided with a device for supplying the covering material, whereby the advantages set forth above can once again be achieved. The covering material supplying device herein advantageously comprises at least one roll holder for receiving a supply roll of the covering material. A large quantity of covering material can thus be readily supplied and placed in readiness.

According to yet another aspect, the invention provides an installation provided with a device for placing onto each other and pressing the visible side of the panel and the covering material, with which these operations can be performed in simple manner. The placing and pressing device preferably comprises at least one pressing element and at least one counterpressure element co-acting therewith, whereby a considerable force can be exerted on the covering material and the panel. In order to allow the placing and pressing to be performed in a continuous movement, the at least one counterpressure element is advantageously a roller of the roller table and the at least one pressing element is advantageously a pressing roller mounted above the roller table.

The glue layer-applying device can comprise at least one glue roller which is arranged rotatably in a glue container and placed in the path of the covering material between the roll holder and the placing and pressing device, whereby the glue can be applied uniformly to the covering material. In order to distribute the glue even more uniformly, the glue-applying device can further comprise at least one glue distributing roller placed in the path of the covering material between the glue roller and the placing and pressing device. For a good distribution of the glue in transverse direction of the covering material, the at least one glue roller and/or the at least one glue distributing roller preferably has a surface layer with a profile whereby the glue, during rotation of the roller around its axis, is transported parallel to this axis. The glue roller and the glue distributing roller can herein have differently profiled surface layers.

The placing and pressing device preferably has means for folding around at least one side edge of the panel an edge part of the covering material protruding outside thereof, whereby panels with a attractively finished side edge can be obtained. An installation with which the covering material can be folded in simple manner is obtained when the folding means comprise at least one deflecting roller placed behind the pressing roller and enclosing an angle therewith. A gradual folding operation is herein achieved by means of a number of successively placed deflecting rollers enclosing different angles with the pressing roller. The deflecting roller(s) is/are preferably not straight, but has/have a diabolo shape, thereby enhancing the folding operation.

According to a final aspect of the invention, the covering installation can be provided with a device for cutting the covering material to size. Successive sheets of the covering material can hereby be brought in each case to the same size in simple manner. The cutting device for instance comprise one knife movable substantially transversely of the direction of transport of the panel and the covering material.

An efficient cutting operation is herein achieved when the knife can be moved reciprocally parallel to a main plane of the panel. In order to limit the construction length of the installation, the cutting device is preferably placed between the pressing element and the folding means.

Finally, the invention further relates to a glue layer-applying device, a panel supply device, a covering material supply device, a placing and pressing device and a cutting device for use in the installation as described above.

The invention is now elucidated on the basis of an embodiment, wherein reference is made to the annexed drawing, in which:

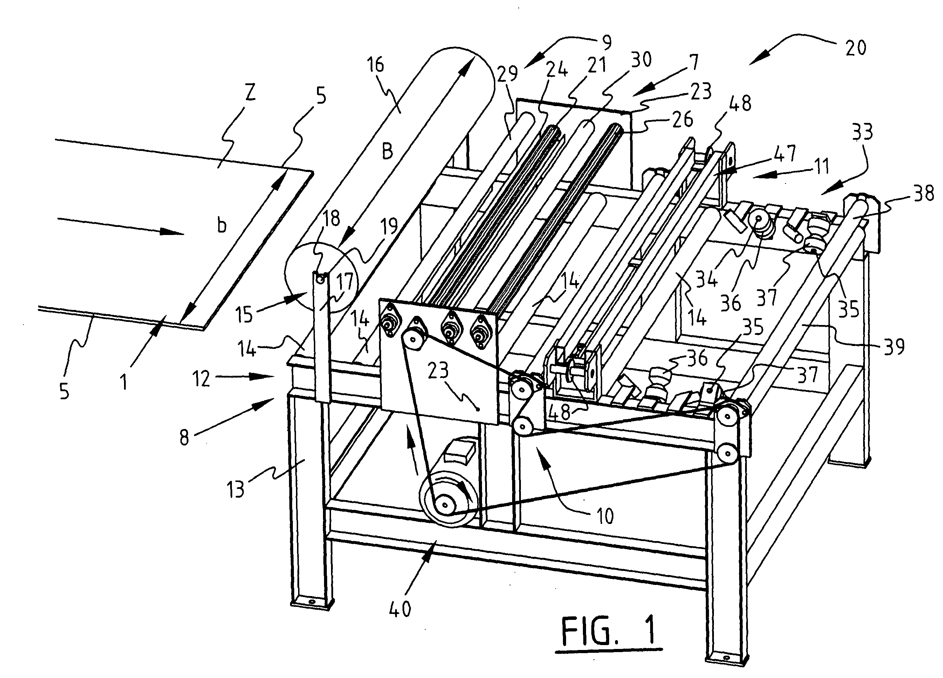

Fig. 1 is a perspective view of a covering installation according to the invention,

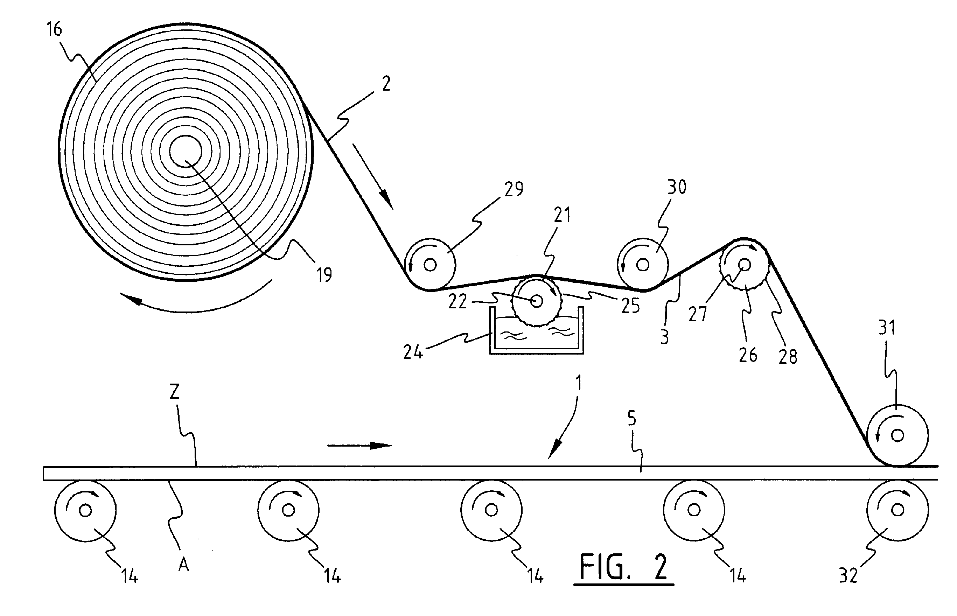

Fig. 2 is a schematic side view in which are shown the steps of supplying the panel and the covering material and the application of the layer of glue,

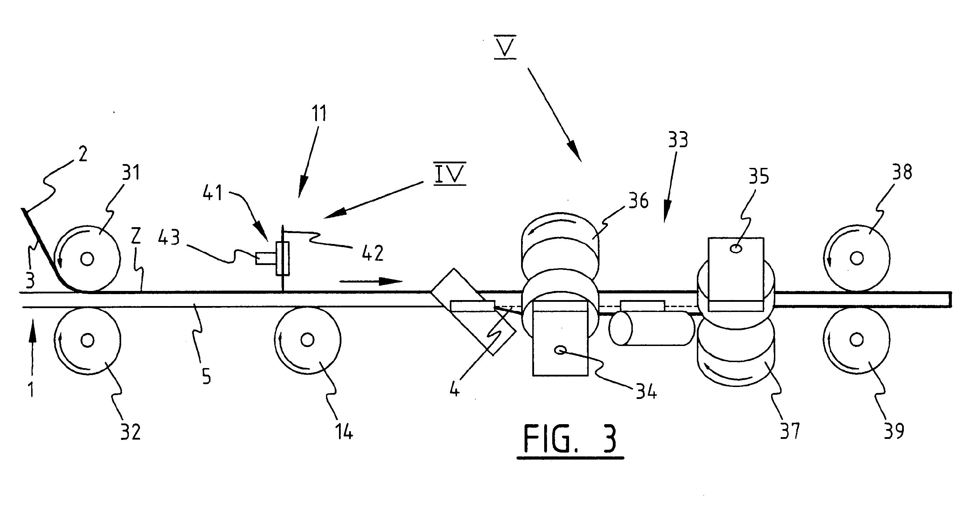

Fig. 3 is a schematic side view showing the steps of placing onto each other and pressing of the panel and the covering material, as well as the folding of the edges of the covering material and the cutting thereof,

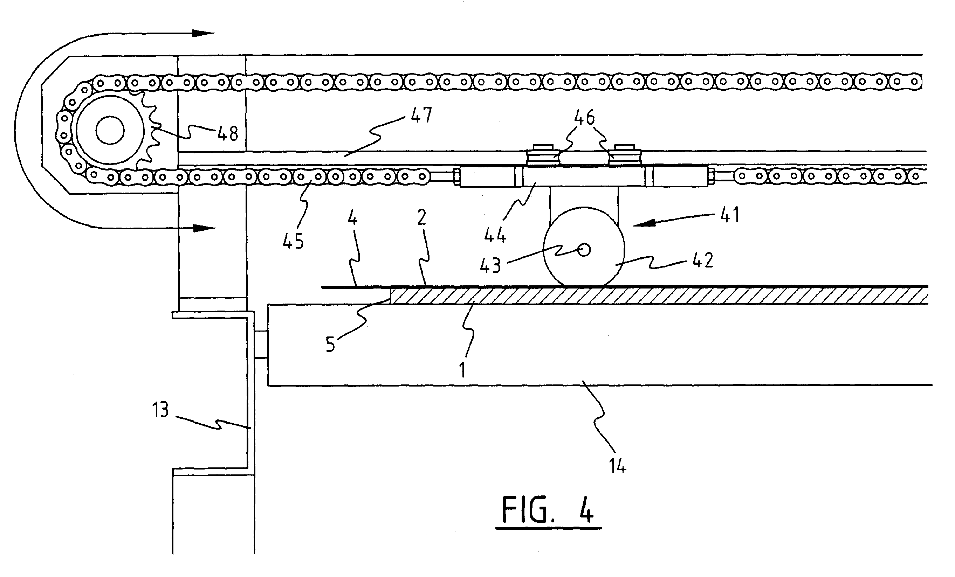

Fig. 4 is a partly cross-sectional view according to arrow IV in fig. 3, in which a part of the cutting device of the installation is shown, and

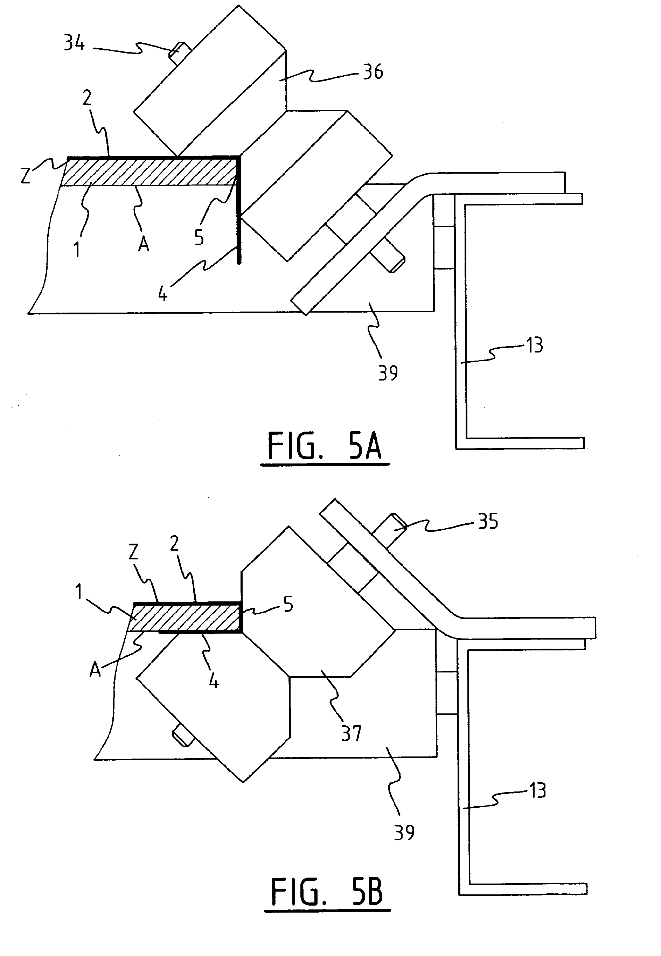

Fig. 5A and 5B are partly cross-sectional detail views of two successive deflecting rollers.

An installation 20 for fixing a flexible covering material 2 on the visible side Z of a panel 1 comprises in the first instance a device 8 for supplying panel 1 and a device 9 for supplying covering material 2. In addition, installation 20 is provided with a device 7 for applying a layer of glue 3 between panel 1 and covering material 2, and a device 10 for placing onto each other and pressing panel 1 and covering material 2. Installation 20 is further also equipped with a device 11 for cutting the covering material 2 to size. Finally, there is also provided a drive 40 for carrying out the different operations mechanically.

The panel supplying device 8 comprises a roller table 12 which is formed by a frame 13 in which a number of rollers 14 supporting panel 1 are rotatably mounted. A lifting unit (not shown here) can optionally also be available before roller table 12, on which unit a supply stack of panels is arranged. This stack can then be raised over the thickness of one panel 1 at a time, whereafter the topmost panel of the stack can be pushed onto the roller table.

The covering material supplying device 9 comprises a roll holder 15, which in the shown embodiment is fixed on frame 13 of roller table 12 and in which a supply roll 16 of the covering material can be accommodated in freely rotatable manner. Roll holder 15 is here formed by two parallel posts 17 with a recess 18 on the upper side for mounting a shaft 19 which can be placed through supply roller 16.

The glue layer-applying device 7 comprises a glue roller 21 which is mounted for rotation about a shaft 22 between two walls 23 connected to frame 13 of roller table 12. Beneath glue roller 21 is arranged a glue container 24 in which a supply of glue is held. This supply is held at all times at a level such that the surface 25 of glue roller 21 always runs through the glue when roller 21 is rotating. The surface 25 of glue roller 21 is profiled in order to hold and distribute as evenly as possible the glue taken up from container 24.

The glue layer-applying device 7 is further also provided with a glue distributing roller 26, which is placed behind glue roller 21 and is likewise mounted for rotation about a shaft 27 between walls 23. This glue distributing roller 26 also has a profiled surface 28, the profile of which is chosen such that, when roller 26 rotates on shaft 27, the glue is hereby transported parallel to this shaft 27 along the surface 28.

According to the invention the glue layer-applying device 7 is adapted to apply the layer of glue 3 to the supplied covering material 2, instead of to panel 1 as has been usual heretofore. For this purpose the glue roller 21 and the glue distributing roller 26 are arranged between roll holder 15 and the placing and pressing device 10. The width of glue roller 21 and the glue distributing roller 26 is at least as great as the width B of the supplied covering material 2, so that this covering material can be covered over the whole width B with a glue layer 3. When the choice of the width B of covering material 2 is in turn then greater than the width b of panel 1, the side edges 4 thereof can also be covered, as will be elucidated hereinbelow.

The glue layer-applying device 7 otherwise also has first and second guide rollers 29, 30, which are also mounted rotatably between walls 23. The first guide roller 29 is placed between supply roll 16 and glue roller 21, while the second guide roller 30 is placed between glue roller 21 and the glue distributing roller 26. This ensures that covering material 2 comes into close contact with glue roller 21 and the glue distributing roller 26.

In the shown embodiment the placing and pressing device 10 comprises a pressing element 31 in the form of a pressing roller placed above roller table 12, and a counterpressure element 32 which is formed by a roller of roller table 12. The distance between pressing roller 31 and counterpressure roller 32 corresponds to the thickness of panel 1. Both rollers 31, 32 can be covered with an elastic material, whereby panel 1 and covering material 2 can be pressed together firmly and uniformly.

The placing and pressing device 10 is further provided with means 33 for folding protruding edge parts 5 of covering material 2 around the side edges 4 of panel 1. These folding means 33 are here formed by pairs of deflecting rollers 36, 37 mounted on either side in frame 13 of the roller table and rotatable about respective shafts 34, 35. The rotation shafts 34, 35 of each pair of deflecting rollers 36, 37 herein enclose different angles with pressing roller 31, and therefore with the main plane of panel 1, whereby folding of the covering material 2 round the side edges 4 of panel 1 can take place gradually. In the shown embodiment the deflecting rollers 36, 37 furthermore each have a diabolo shape, whereby folding over of edge parts 4 is further enhanced. Following the final pair of deflecting rollers 37 are arranged a further pressing roller 38 and counterpressure roller 39, whereby the folded side edges 4 of covering material 2 are pressed firmly against the rear side A of panel 1.

Cutting device 11 is attached to frame 13 of roller table 12 between the foremost and rearmost pairs of pressure and counterpressure rollers 31, 32 and 38, 39 respectively, and comprises a knife 41 which, in the shown embodiment, is movable transversely of the direction of transport of panel 1 through installation 20, i.e. parallel to rollers 14 of roller table 12. Knife 41 has a cutting blade 42 which is suspended from a carriage 44 for rotation about a shaft 43, which carriage is fixed to a chain 45 and is guided in a sub-frame 47 by rollers 46. Chain 45 is trained around two chain wheels 48, one of which can be driven in two opposing directions by a motor (not shown here).

Finally, installation 20 is also provided with a drive 40 formed by a motor 49 which carries on its output shaft a pulley 50, around which is trained a drive belt 51. This drive belt 51 runs over a pulley 52 connected to glue roller 21, a pulley 53 connected to pressing roller 31, a pulley 54 connected to counterpressure roller 32, a pulley 55 connected to the second pressing roller 38, and finally a pulley 56 connected to second counterpressure roller 39.

Fixing of the covering material 2 onto the visible side Z of panel 1 using the above described installation 20 now proceeds as follows.

Firstly, panel 1 is lifted from a supply stack and guided onto roller table 12. This can take place by means of a conveyor (not shown here) or a roller table placed before roller table 12. As soon as it enters the pinch between the driven pressing roller 31 and the counterpressure roller 32, panel 1 is automatically carried further along into installation 20.

The covering material 2 is simultaneously carried from supply roll 16 to the pinch between pressing roller 31 and counterpressure roller 32 via the first guide roller 29, glue roller 21, the second guide roller 30 and the glue distributing roller 26. The covering material 2 is also carried along automatically from the pinch.

A layer of glue 3 is applied by glue roller 21 to covering material 2 as it passes, this layer of glue then being spread even further in width direction B by the glue distributing roller 26. When covering material 2 meets the visible side Z of panel 1 at the position of pressing roller 31 and counterpressure roller 32, it is pressed thereon. Air bubbles which may be present are here immediately smoothed out over the whole width by the pressure of rollers 31, 32, and a very good adhesion is realized.

Since the width B of covering material 2 is greater than the width b of panel 1, edge parts 4 of the covering material 2 protrude on either side beyond the side edges 5 of panel 1. When panel 1 with the covering material 2 glued onto the visible side Z thereof is transported further by the rotation of pressure and counterpressure rollers 31, 32, these edge parts 4 come successively into contact with the first and second pairs of deflecting rollers 36, 37. They are hereby folded around side edges 5 of panel 1 and glued thereto in two steps. The edge parts 4 are firmly pressed against and glued to rear side A of panel 1 by passing through the second pressure and counterpressure rollers 38, 39.

When panel 1 and the covering material glued thereon have been guided so far through the installation that the rear edge of panel 1 has passed through the first pressure and counterpressure rollers 31, 32, the cutting device 11 is operated, whereby knife 41 is moved in transverse direction along the rear edge of panel 1 and the strip of covering material 2 is cut through. Covering of panel 1 is then completed and it can be removed from installation 20 and stored.

If successive panels 1 are guided through installation 20 with their end edges against each other, wherein a leading panel 1 is thus pushed along by the subsequent panels 1, the cut in covering material 2 also forms the front edge of a new sheet. When however the panels 1 are carried through installation 20 with a mutual spacing, cutting device 11 must also be operated as soon as the leading edge of panel 1 has passed through the first pressure and counterpressure rollers 31, 32, in order to cut off the portion of the covering material 2 extending over the intermediate space between panels 1. Knife 41 is herein moved in opposite direction at each subsequent cutting operation so that a reciprocating movement is carried out each time, wherein each stroke is in principle utilized efficiently.

In this manner a panel can be covered rapidly and easily with a covering layer, which can furthermore extend around the edges of the panel.

Although the invention is elucidated above on the basis of one embodiment, it will be apparent that this can be varied in many ways. More or fewer operations than described could thus take place mechanically. The panel supplying device, the covering material supplying device, the glue layer-applying device, the placing and pressing device and/or the cutting device could also be used separately or at least in different configurations, while still retaining the advantages associated therewith.

The scope of the invention is therefore defined solely by the appended claims.

## Claims

1. Method for fixing a flexible covering material (2) to a visible side (Z) of a panel (1), comprising the steps of:
a) supplying the panel (1),
b) supplying the covering material (2),
c) applying a layer of glue (3) between the visible side (Z) of the panel (1) and the covering material (2), and
d) placing on each other and pressing the visible side (Z) of the panel (1) and the covering material (2),
**characterized in that** the layer of glue (3) is applied to the covering material (2).

2. Method as claimed in claim 1, **characterized in that** the covering material (2) has a width (B) which is greater than the width (b) of the panel (1), the glue layer (3) is applied substantially over the whole width (B) of the covering material (2) and, along at least one side edge (4) of the panel (1), an edge part (5) of the covering material (2) protruding outside said panel is folded around the side edge (4) and glued to the side edge (4) and/or a rear side (A) of the panel (1) remote from the visible side (Z).

3. Method as claimed in claim 2, **characterized in that** the covering material (2) is placed on the panel (1) such that an edge part (5) protrudes on both sides thereof, and the protruding edge parts (5) are folded over on both sides and glued to the side edge (4) and/or the rear side (A) of the panel (1).

4. Method as claimed in any of the foregoing claims or according to the preamble of claim 1, **characterized in that** the covering material (2) is supplied on a roll (6), and is placed and pressed onto the visible side (Z) of the panel (1) from the roll (6) before being cut.

5. Method as claimed in claim 4, **characterized in that** the cutting takes place mechanically.

6. Method as claimed in any of the foregoing claims or according to the preamble of claim 1, **characterized in that** supply of the panel (1) and/or supply of the covering material (2) takes place mechanically.

7. Method as claimed in any of the foregoing claims or according to the preamble of claim 1, **characterized in that** the pressing and/or folding takes place mechanically.

8. Installation (20) for fixing a flexible covering material (2) to a visible side (Z) of a panel (1), comprising a device (7) for applying a layer of glue (3) between the visible side (Z) of the panel (1) and the covering material (2), **characterized in that** the glue layer-applying device (7) is adapted to apply the glue layer (3) to the covering material (2).

9. Installation (20) as claimed in claim 8 or according to the preamble thereof, **characterized by** a device (8) for supplying the panel (1).

10. Installation (20) as claimed in claim 9, **characterized in that** the panel supplying device (8) comprises at least one roller table (12).

11. Installation (20) as claimed in claim 10, **characterized in that** the panel supplying device (8) comprises at least one lifting unit.

12. Installation (20) as claimed in any of the claims 8-11 or according to the preamble of claim 8, **characterized by** a device (9) for supplying the covering material (2).

13. Installation (20) as claimed in claim 12, **characterized in that** the covering material supplying device (9) comprises at least one roll holder (15) for receiving a supply roll (16) of the covering material (2).

14. Installation (20) as claimed in any of the claims 8-13 or according to the preamble of claim 8, **characterized by** a device (10) for placing onto each other and pressing the visible side (Z) of the panel (1) and the covering material (2).

15. Installation (20) as claimed in claim 14, **characterized in that** the placing and pressing device (10) comprises at least one pressing element (31) and at least one counterpressure element (32) co-acting therewith.

16. Installation (20) as claimed in claims 10 and 15, **characterized in that** the at least one counterpressure element (32) is a roller of the roller table (12) and the at least one pressing element (31) is a pressing roller mounted above the roller table (12).

17. Installation (20) as claimed in claims 13 and 14, **characterized in that** the glue layer-applying device (7) comprises at least one glue roller (21) which is arranged rotatably in a glue container (24) and placed in the path of the covering material (2) between the roll holder (15) and the placing and pressing device (10).

18. Installation (20) as claimed in claim 17, **characterized in that** the glue-applying device (7) comprises at least one glue distributing roller (26) placed in the path of the covering material (2) between the glue roller (21) and the placing and pressing device (10).

19. Installation (20) as claimed in claim 18, **characterized in that** the at least one glue roller (21) and/or the at least one glue distributing roller (26) has a surface layer (25;28) with a profile whereby the glue, during rotation of the roller (21;26) around its axis (22;27), is transported parallel to this axis (22;27).

20. Installation (20) as claimed in claim 19, **characterized in that** the glue roller (21) and the glue distributing roller (26) have differently profiled surface layers (25;28).

21. Installation (20) as claimed in claim 14 or 15, **characterized in that** the placing and pressing device (10) has means (33) for folding around at least one side edge (4) of the panel (1) an edge part (5) of the covering material (2) protruding outside thereof.

22. Installation (20) as claimed in claims 15 and 21, **characterized in that** the folding means (33) comprise at least one deflecting roller (36,37) placed behind the pressing roller (31) and enclosing an angle therewith.

23. Installation (20) as claimed in claim 22, **characterized by** a number of successively placed deflecting rollers (36,37) enclosing different angles with the pressing roller (31).

24. Installation (20) as claimed in claim 22 or 23, **characterized in that** the at least one deflecting roller (36,37) has a diabolo shape.

25. Installation (20) as claimed in any of the claims 8-24 or according to the preamble of claim 8, **characterized by** a device (11) for cutting the covering material (2) to size.

26. Installation (20) as claimed in claim 25, **characterized in that** the cutting device (11) comprises at least one knife (41) movable substantially transversely of the direction of transport of the panel (1) and the covering material (2).

27. Installation (20) as claimed in claim 26, **characterized in that** the knife (41 is movable reciprocally parallel to a main plane of the panel (1).

28. Installation (20) as claimed in claims 15, 21 and 25-27, **characterized in that** the cutting device (11) is placed between the pressing element (31) and the folding means (33).

29. Glue layer-applying device (7), evidently intended for use in an installation as claimed in any of the claims 8-28.

30. Panel supply device (8), evidently intended for use in an installation as claimed in any of the claims 9-28.

31. Covering material supply device (9), evidently intended for use in an installation as claimed in any of the claims 12-28.

32. Placing and pressing device (10), evidently intended for use in an installation as claimed in any of the claims 14-28.

33. Cutting device (11), evidently intended for use in an installation as claimed in any of the claims 25-28.
